# EUROPÄISCHE PATENTSCHRIFT

(11) **EP 2 041 440 B1**
(45) Veröffentlichungstag und Bekanntmachung des Hinweises auf die Patenterteilung: **13.02.2013**
(21) Anmeldenummer: 07787043.4
(22) Anmeldetag: 04.07.2007
(51) Int. Cl.: F16B 37/04, F16B 37/06, F16B 5/06, F16B 37/08, B60R 13/02

(54) **BEFESTIGUNGSELEMENT**
ATTACHMENT ELEMENT
ÉLÉMENT DE FIXATION

(30) Priorität: 13.07.2006 DE 102006032641
(43) Veröffentlichungstag der Anmeldung: 01.04.2009
(73) Patentinhaber: Newfrey LLC, Newark, Delaware 19711 (US)
(72) Erfinder: WERNER, Wolfgang, 72766 Reutlingen (DE); STIGLER, Mario, 35641 Schöffengrund (DE); SCHNEIDER, Michael, 35633 Lahnau (DE); REINDL, Johann-Adalbert, 35444 Biebertal (DE); SCHMIDT, Thomas, 38275 Haverlah (DE)
(74) Vertreter: Haar, Lucas Heinz Jörn
(86) Internationale Anmeldenummer: PCT/EP2007/056729
(87) Internationale Veröffentlichungsnummer: WO 2008/006753

(56) Entgegenhaltungen:
- EP-A1- 0 566 296
- DE-A1-102004 031 342
- GB-A- 2 307 508
- US-A- 5 795 118

## Beschreibung

Die Erfindung betrifft ein Befestigungselement mit einem Schaft, einem an einem Ende des Schafts angeordneten Kopf, der zum Anschweißen an ein Werkstück bestimmt ist. und wenigstens einer an dem Schaft ausgebildeten Sperrklinke, die sich von dem Schaft radial nach außen und in Richtung des Kopfes erstreckt und radial nach innen federnd nachgiebig ist, wobei der Schaft eine Längsbohrung hat. in der ein Bolzen angeordnet ist, und wobei ein Ende des Bolzens aus der Längsbohrung herausragt und den Kopf bildet.

Befestigungselemente der angegebenen Art werden u.a. im Automobilbau verwendet, um verkleidungsteile, beispielsweise an dem Boden, den Wänden, den Türen oder in dem Dach einer Fahrzeugkarosserie zu befestigen. Die Befestigungselemente sollen hierbei die Verkleidungsteile fest und dauerhaft an dem jeweiligen Karosserieteil halten und außerdem eine möglichst einfache und kostengünstige Montage der Verkleidung ermöglichen.

Ein Befestigungselement der im Oberbegriff des Patentanspruchs 1 angegebenen Art ist aus US 5 795 11/8 A bekannt. Bei diesem Befestigungselement besteht der Flansch aus einem geschlossenen Ring, der die Abstützenden der Sperrklinken in axialer Richtung überdeckt. Die Herstellung des Befestigungselements erfordert daher teure Formen.

Ein aus DE 10 2004 031 342 A1 bekanntes Befestigungselement weist ein hülsenförmiges Außenteil und ein in dieses einsetzbares Innenteil auf, die beide aus Kunststoff bestehen, wobei das Innenteil eine Längsbohrung hat, in die ein mit einem Außengewinde versehener Bolzen eingeschraubt ist, dessen Kopf ein Anschweißende bildet. Das bekannte Befestigungselement besteht aus drei separaten Teilen und ist daher verhältnismäßig aufwändig herzustellen und zu montieren. Es weist außerdem eine relativ große axiale Länge auf, wodurch seine Anwendungsmöglichkeiten eingeschränkt sind.

Aus DE 199 29 924 A1 ist ein einteilig aus Kunststoff herstellbares Befestigungselement bekannt, das einen Schenkelabschnitt mit einem Fuß aufweist, der zum Anschweißen an ein Werkstück ausgebildet ist, und das zwei auf entgegengesetzten Seiten des Schenkelabschnitts angeordnete, elastische Eingriffsklauenabschnitte hat, die sich diagonal auswärts von dem Ende des Schenkelabschnitts zum Fußabschnitt erstrecken und radial nach innen biegbar sind, und wobei die Eingriffsklauenabschnitte jeweils eine als nach innen gehende Ausnehrnung gebildete Eingriffsstufe haben. Dieses Befestigungselement ist nur zum Anschweißen an Kunststoffteile geeignet. Es hat außerdem den Nachteil, dass die axiale Einspannlänge von der Ausbildung der Schweißverbindung abhängig ist, so dass seine spielfreie Fixierung nur bei ausreichender Elastizität der zu befestigenden Verkleidung möglich ist.

Der Erfindung liegt die Aufgabe zugrunde, ein Befestigungselement der eingangs genannten Art zu schaffen, welches einfach und kostengünstig herstellbar ist und eine einfache Montage ermöglicht. Weiterhin soll eine in axialer Richtung spielfrei und von der Ausbildung der Schweißverbindung unabhängige Halterung der zu befestigenden Bauteile erreicht werden.

Die Aufgabe wird durch ein Befestigungselement mit den in Patentanspruch 1 angegebenen Merkmalen gelöst. Vorteilhafte Ausgestaltungen des Befestigungselements sind in den weiteren Ansprüchen angegeben.

Nach der Erfindung umfasst das Befestigungselement einen Schaft, einen an einem Ende des Schafts angeordneten Kopf, der zum Anschweißen an ein Werkstück bestimmt ist, wenigstens eine an dem Schaft ausgebildete Sperrklinke, die sich von dem Schaft radial nach außen und in Richtung des Kopfes erstreckt und radial nach innen federnd nachgiebig ist und die auf ihrer Außenseite eine Eingriffsausnehmung mit einer radialen und einer axialen Abstützfläche aufweist, wobei der Schaft eine Längsbohrung hat, in der ein Bolzen angeordnet ist, wobei ein Ende des Bolzens aus der Längsbohrung herausragt und den Kopf bildet, wobei an dem Schaft ein in axialer Richtung federnd nachgiebiger Flansch ausgebildet ist, dessen äußerer Randbereich der Eingriffsausnehmung der Sperrklinke gegenüberliegt und wobei der Flansch im Bereich der axialen Projektion der Sperrklinken ausgespart ist.

Das erfindungsgemäße Befestigungselement zeichnet sich durch einfache Herstellbarkeit und vielseitige Verwendungsmöglichkeiten aus. Je nach Material des Werkstücks, an dem das Befestigungselement angeschweißt werden soll, kann in den Schaft ein Bolzen aus geeignetem Material, beispielsweise Stahl, Aluminium oder Kunststoff eingesetzt werden. Schaft, Sperrklinke und Flansch des Befestigungselements werden vorzugsweise aus einem thermoplastischen Kunststoff hergestellt.

Das erfindungsgemäße Befestigungselement ermöglicht weiterhin eine spielfreie und schwingungssichere Befestigung eines Bauteils, beispielsweise eines Verkleidungsteils eines Fahrzeugs, da dieses zwischen dem nachgiebigen Flansch und den Abstützflächen der Sperrklinke unabhängig von der Ausbildung der Schweißverbindung festgeklemmt werden kann. Zur Montage eines zu befestigenden Bauteils ist es lediglich erforderlich, dieses mit seiner Befestigungsöffnung auf das angeschweißte Befestigungselement aufzusetzen und bis zum Einrasten in die Eingriffsausnehmung der Sperrklinke anzudrücken. Nach dem Einrasten wird das Verkleidungsteil durch den federnd nachgiebigen Flansch in axialer Richtung und durch die federnde Sperrklinke in radialer Richtung bezogen auf den Schaft spielfrei gehalten. Die Gestaltung der Eingriffsausnehmung sorgt hierbei dafür, dass die Sperrklinke in die Öffnung des Verkleidungsteils eingreift und sich in radialer Richtung nach außen in der Öffnung des Verkleidungsteils abstützt.

In einer bevorzugten Ausgestaltung weist das Befestigungselement nach der Erfindung mehrere, vorzugsweise drei Sperrklinken auf, die an dem Schaft ausgebildet und durch Zwischenräume voneinander getrennt sind, wobei die Außenflächen der Sperrklinken Abschnitte einer gemeinsamen Kegelstumpffläche bilden und wobei die radialen Abstützflächen der Eingriffsausnehmungen der Sperrklinken auf einer gemeinsamen, zur Kegelstumpffläche koaxialen Zylinderfläche liegen. Diese Gestaltung erleichtert die Positionierung eines zu befestigenden und eine kreisrunde Befestigungsöffnung aufweisenden Bauteils bei der Montage und sorgt für eine positionsgenaue Fixierung des Bauteils durch das Befestigungselement.

Eine einfach Herstellung des Befestigungselements wird nach der Erfindung dadurch ermöglicht, dass der Flansch im Bereich der axialen Projektion der Sperrklinken ausgespart ist. Hierdurch ist es möglicht, die aus Schaft, Sperrklinken und Flansch bestehende Baueinheit einstückig mit einem zweiteiligen und daher einfachen Formwerkzeug zu formen.

Das Anschweißen des Befestigungselements erfolgt bei einem metallischen Bolzen vorzugsweise mit Hilfe eines elektrischen Schweißgeräts, welches nach dem Hubzündungsverfahren arbeitet. Hierbei ist es notwendig, den Bolzen mit einem Leiter zur Zuführung des Schweißstroms in Kontakt zu bringen. Erfindungsgemäß kann hierzu der Kopf des Bolzens zwischen seinem Anschweißende und dem Schaft einen Kontaktabschnitt für das Ansetzen einer Schweißzange haben. Ist die gewünschte axiale Länge des Kopfes zur Ausbildung eines Kontaktabschnitts zu klein, so kann nach einem weiteren Vorschlag der Erfindung vorgesehen sein, dass in der Wand des Schafts in radialer Richtung von außen frei zugängliche Öffnungen ausgebildet sind, die in die Längsbohrung münden. Durch diese Öffnungen kann eine Schweißzange oder ein Kontaktelement mit dem Bolzen in Kontakt gebracht werden.

Ist der Bolzen mit einem Außengewinde versehen und in die Längsbohrung des Schafts eingeschraubt, so kann an dem dem Kopf entgegengesetzten Ende des Schafts ein Werkzeugeingriffsbereich zum Ansetzen eines Schraubwerkzeugs vorgesehen sein. Hierdurch kann durch Abschrauben des aus Schaft, Sperrklinken und Flansch bestehenden Teils von dem Bolzen die Befestigung eines Bauteils auf einfache Weise gelöst werden.

Eine andere Möglichkeit, um ein gehaltenes Bauteil von dem Befestigungselement zu lösen, besteht darin, mit Hilfe eines geeigneten Werkzeugs, beispielsweise eines Rohres, die Sperrklinken so weit nach innen zu biegen, bis sie von dem gehaltenen Bauteil freikommen.

Bei Schweißvorrichtungen zum Anschweißen vergleichbarer Bauteile hat es sich bewährt, diese einzeln oder gruppenweise durch einen Kunststoffschlauch mit Hilfe von Blasluft der Schweißvorrichtung zuzuführen. Hierbei sind sowohl Kunststoffschläuche mit rundem Querschnitt als auch Profilschläuche im Einsatz. Bei letzteren entspricht das innere Schlauchprofil dem Umgrenzungsprofil, das das zu fördernde Bauteil hat, wenn es sich in geeigneter Förderlage befindet. Bei der Verwendung eines Profilschlauchs ergeben sich jedoch, bedingt durch die hohe Steifigkeit eines solchen Schlauchs, Einschränkungen in der Bewegbarkeit der Schweißvorrichtung, so dass die Förderung durch einen Rundschlauch bevorzugt wird. Das Befestigungselement nach der Erfindung eignet sich jedoch nicht ohne weiteres für die Förderung in einem Rundschlauch, da es keine geeigneten Führungsflächen hat, die das Befestigungselement in einer geeigneten Förderlage mit in Förderrichtung zeigender Längsachse führen und stabilisieren. Um gleichwohl die Förderung durch einen Rundschlauch zu ermöglichen, sind nach einem weiteren Vorschlag der Erfindung an dem dem Kopf entgegengesetzten Ende des Schaftes Kupplungselemente vorgesehen, die geeignet sind, den Kopf eines zweiten Befestigungselements zu umgreifen. Werden mehrere Befestigungselemente dieser Art koaxial und in gleicher Ausrichtung hintereinander angeordnet, so bilden sie, gestützt durch die Kupplungselemente, eine aus mehreren Befestigungselementen zusammengesetzte Kette, die sich störungsfrei durch einen Rundschlauch fördern lässt, wobei die Befestigungselemente durch den Rand ihrer Flansche geführt werden.

Sollen Befestigungselemente nach der Erfindung auch einzeln durch einen Rundschlauch förderbar sein, so kann dies nach einem weiteren Vorschlag durch die Außenkontur des Flansches axial verlängernde Führungselemente erreicht werden, deren axiale Länge so groß bemessen ist, dass das Befestigungselement in einem Förderschlauch mit rundem Querschnitt lagestabil und ohne Klemmneigung mit zur Schlauchachse koaxialer Längsachse förderbar ist. Die Führungselemente sind durch Stollbruchstellen abtrennbar mit dem Befestigungselement verbunden. In einer vorteilhaften Ausgestaltung können die Führungselemente aus mehreren achsparallelen Stäben bestehen, die am Umfangsrand des Flansches angeordnet sind. Eine andere geeignete Ausgestaltung sieht vor, dass die Führungselemente aus Platten bestehen, die sternförmig an den Sperrklinken oder dem Schaft angeordnet sind und achsparallele äußere Führungskanten haben. Anstelle der Führungselemente oder in Ergänzung hierzu kann in einem geeigneten Abstand und parallel zu dem Flansch ein Führungsteller gleichen Durchmessers angeordnet sein, der über Sollbruchstellen abtrennbar an dem Schaft oder den Führungselementen angebracht ist.

Die Erfindung wird nachfolgend anhand von Ausführungsbeispielen näher erläutert, die in der Zeichnung dargestellt sind. Es zeigen
- Figur 1: eine Ansicht einer ersten Stirnseite eines erfindungsgemäßen Befestigungselements,
- Figur 2: einen Querschnitt II - II des Befestigungselements gemäß Figur 1.
- Figur 3: eine Ansicht der zweiten Stirnseite des Befestigungselements gemäß Figur 1,
- Figur 4: eine Seitenansicht zweier, zur Förderung miteinander gekoppelter Befestigungselemente gemäß Figur 1,
- Figur 5: ein Befestigungselement mit plattenförmigen Führungselementen,
- Figur 6: ein Befestigungselement mit einem Führungsteller,
- Figur 7: eine Anordnung zweier mit Führungsstäben versehener Befestigungselemente und
- Figur 8: einen Querschnitt durch einen Zusammenbau unter Verwendung eines Befestigungselements gemäß Figur 1.
- Figur 9: eine Ansicht einer Stirnseite eines weiteren erfindungsgemäßen Befestigungselements,
- Figur 10: eine Ansicht X des Befestigungselements gemäß Figur 9,
- Figur 11: eine Ansicht XI des Befestigungselements gemäß Figur 9,
- Figur 12: eine Ansicht XII des Befestigungselements gemäß Figur 9,
- Figur 13: einen Querschnitt XIII-XIII des Befestigungselements gemäß Figur 9.

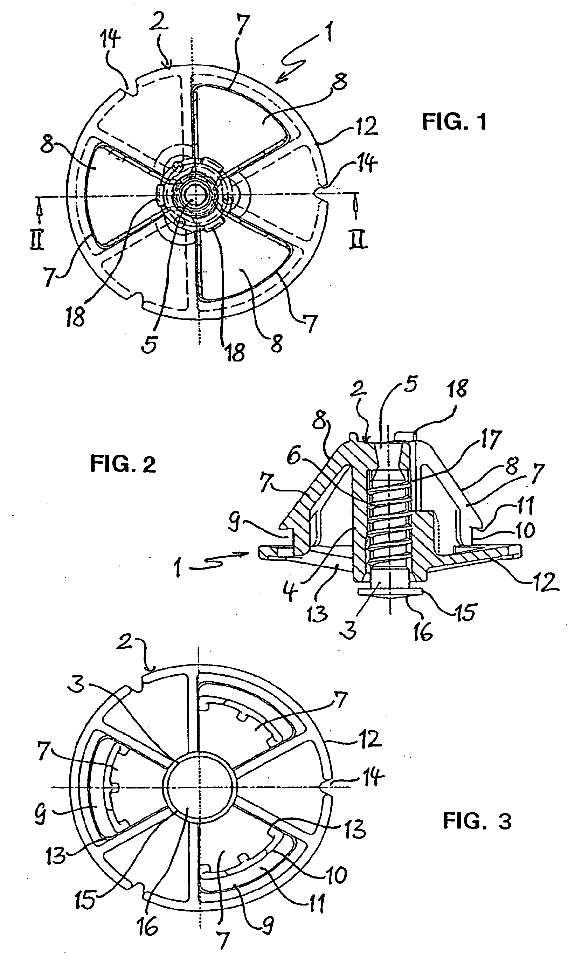

Das in den Figur 1 bis 3 dargestellte Befestigungselement 1 besteht aus einem im Spritzgießverfahren aus thermoplastischem Kunststoff herstellbaren Clip 2 und einem in diesen eingesetzten Bolzen 3, der aus Metall, z.B. Stahl oder Aluminium, aber auch aus Kunststoff bestehen kann.

Der Clip 2 hat einen geraden Schaft 4 mit einer zentralen Längsbohrung 5, die zur Aufnahme des Bolzens 3 dient. In der Längsbohrung 5 sind Längsrippen ausgebildet, die zur Verankerung des mit einem Außengewinde versehenen Gewindeabschnitts 6 des Bolzens 3 dienen. An das eine Ende des Schafts 4 sind drei Sperrklinken 7 angeformt, die sich radial nach außen und in Richtung des anderen Endes des Schaftes 4 erstrecken. Die Sperrklinken 7 haben einen gleichmäßigen Abstand voneinander und erstrecken sich jeweils über einen Sektor von 60° bezogen auf die Achse der Längsbohrung 5. Auf ihrer Außenseite weisen die Sperrklinken 7 Außenflächen 8 auf, die Abschnitte einer gemeinsamen, zur Längsachse koaxialen Kegelstumpffläche bilden. Der Kegelwinkel der Kegelstumpffläche liegt vorzugsweise in einem Bereich von 60° bis 90°. An ihren freien Enden sind die Sperrklinken 7 mit Eingriffsausnehmungen 9 versehen, die zur Längsachse koaxiale zylindrische Abstützflächen 10 und ebene Abstützflächen 11 haben. Die Abstützflächen 11 liegen in einer gemeinsamen radialen Ebene.

An das den Anbindungsstellen der Sperrklinken 7 entgegengesetzte Ende des Schafts 4 ist ein sich radial nach außen erstreckender Flansch 12 angeformt. Der Flansch 12 hat die Form eines flachen Kegelstumpfs mit einem Kegelwinkel von ungefähr 160° und einen kreisrunden Rand, dessen Außendurchmesser größer ist als die größte radiale Erstreckung der Sperrklinken 7. Im Bereich der axialen Projektion der Sperrklinken 7 weist der Flansch 12 Aussparungen 13 auf, die zur Durchführung von Abschnitten des Formwerkzeugs dienen und dazu bestimmt sind, die Innenseiten der Sperrklinken 7 und die diesen gegenüberliegenden Außenseiten des Schafts 4 zu formen. Die Aussparungen 13 sorgen außerdem für eine im Vergleich zu einem geschlossenen Flansch erhöhte elastische Nachgiebigkeit des Flansches 12. In den nicht ausgesparten Bereichen sind im Umfangsrand des Flansches 12 in einem Abstand von 120° Kerben 14 vorgesehen. Mit Hilfe der Kerben 14 lässt sich das Befestigungselement 1 bei der Förderung oder Verarbeitung genau positionieren.

Der in der Längsbohrung 5 angeordnete Bolzen 3 ragt an dem flanschseitigen Ende des Schafts 4 aus der Längsbohrung 5 heraus und bildet dort einen Kopf 15 mit einer flachkonischen Anschweißfläche 16. Der Durchmesser des Kopfes 15 ist größer als derjenige des Bolzens 3. In den Zwischenräumen zwischen den Sperrklinken 7 sind in dem Schaft 4 Öffnungen 17 vorgesehen, die in die Längsbohrung 5 münden. Durch die Öffnungen 17 kann der Bolzen 3 von einer Schweißvorrichtung gegriffen und mit einem den Schweißstrom leitenden Element in Kontakt gebracht werden. An dem Kopf 15 oder zwischen diesem und dem Schaft 4 ist daher kein zusätzlicher Freiraum zum Greifen und Kontaktieren des Bolzens 3 in der Schweißvorrichtung erforderlich.

An dem dem Kopf 15 entgegengesetzten Ende des Schaftes 4 sind axial vorspringende Kupplungselemente 18 angeordnet, die zum Halten und Zentrieren des Kopfes eines zweiten, gleichartigen Befestigungselements dienen. Mit Hilfe dieser Kupplungselemente 18 können mehrere, in Reihe hintereinander angeordnete Befestigungselemente derart miteinander verbunden werden, dass sie koaxial zueinander ausgerichtet sind und ohne Beeinträchtigung ihrer Ausrichtung gemeinsam gefördert werden können. Die Kupplungselemente 18 können entweder so gestaltet sein, dass der Kopf 15 des jeweils nächsten Elements nur lose zwischen den Kupplungselementen 18 gehalten ist. Denkbar ist aber auch, die Kupplungselemente 18 so auszubilden, dass sie den eingesetzten Kopf 15 des nächsten Befestigungselements festklemmen, so dass eine zur Förderung der Befestigungselemente in einem Kanal oder Schlauch mit rundem Querschnitt ausreichend stabile Verbindung zwischen den einzelnen Elementen erreicht wird.

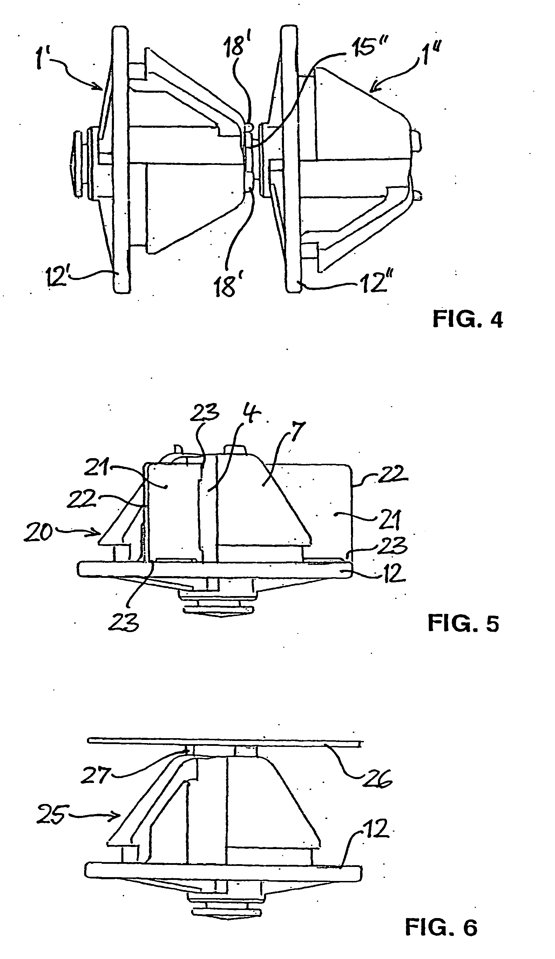

Figur 4 veranschaulicht eine solche Verbindung zweier, in Reihe hintereinander angeordneter Befestigungselemente 1' und 1", die durch Klemmen des Kopfes 15" zwischen den Kupplungselementen 18' zusammengehalten sind. Eine solche Anordnung von zwei oder mehr Befestigungselementen kann in axialer Richtung durch einen Förderkanal, z.B. einen Schlauch mit kreisförmigem Querschnitt gefördert werden, wobei die Flansche 12', 12" die Befestigungselemente an der Schlauchwand klemmfrei führen. Bei der Zuführung zur Schweißvorrichtung werden die Befestigungselemente 1', 1" unter Überwindung der sie verbindenden Klemmkraft voneinander getrennt.

Figur 5 zeigt eine Ausführungsvariante eines Befestigungselements 20, welches zur Einzelförderung in einem runden Schlauch oder Rohr ausgebildet ist. Das Befestigungselement 20 unterscheidet sich von dem zuvor beschriebenen Befestigungselement 1 dadurch, dass in den Zwischenräumen zwischen den Sperrklinken 7 Führungselemente in Form von Platten 21 ausgebildet sind, die zur Führung des Befestigungselements 20 in einem zylindrischen Schlauch, Rohr oder Kanal dienen. Die Platten 21 erstrecken sich in radialer Richtung und haben eine zur Längsachse parallele Außenkante 22, die etwa den gleichen Mittenabstand wie der Außenrand des Flansches 12 hat. Die Platten 21 sind durch Sollbruchstellen 23 mit dem Schaft 4 und dem Flansch 12 verbunden und können vor oder nach dem Anschweißen des Befestigungselements 20 leicht von diesem abgetrennt werden. Die axiale Länge der Außenkante 22 der Platten 21 ist dabei so groß bemessen, dass sich das Befestigungselement 20 in einem zylindrischen Schlauch, Rohr oder Kanal von nur wenig größerem Innendurchmesser nicht um eine quer zur Längsachse verlaufende Achse drehen kann und dass eine klemmfreie Führung gewährleistet ist.

In Figur 6 ist ein Befestigungselement 25 gezeigt, das an seinem dem Flansch 12 entgegengesetzten Ende einen Führungsteller 26 aufweist. Der Führungsteller 26 ist parallel zu dem Flansch 12 ausgerichtet und hat den gleichen Durchmesser wie dieser. Der Flansch 12 und der Führungsteller 26 bilden auf diese Weise zwei in einem Abstand voneinander angeordnete Führungen, durch die ein klemmfreies Gleiten in einem zylindrischen Schlauch oder Rohr sichergestellt ist. Der Führungsteller 26 ist durch Sollbruchstellen 27 lösbar mit dem Befestigungselement 25 verbunden und kann vor dem Einsetzen in die Schweißzange leicht abgebrochen werden.

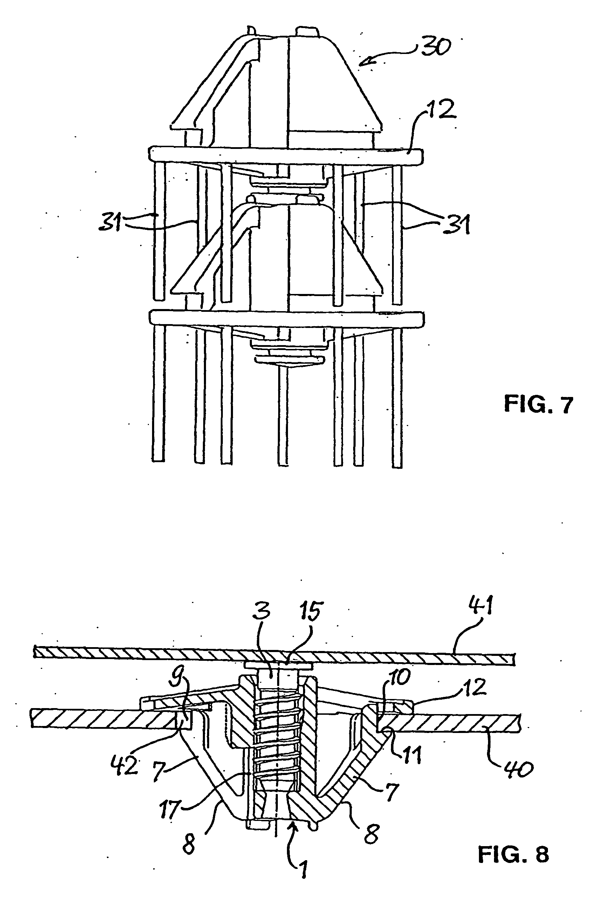

Figur 7 zeigt eine Ausführungsform eines Befestigungselements 30, bei welchem der Flansch 12 auf der dem Kopf zugewandten Seite an seinem äußeren Rand mehrere achsparallele Stäbe 31 aufweist, die als Führungselemente dienen. Die Stäbe 31 sind durch Sollbruchstellen mit dem Flansch 12 verbunden und können daher leicht abgetrennt werden. Mit Hilfe der Stäbe 31 kann das Befestigungselement 30 einzeln lagestabil durch einen Schlauch oder ein Rohr von zylindrischem Querschnitt gefördert werden. Die Stäbe 31 sind außerdem so angeordnet und in ihrer Länge bemessen, dass, wie Figur 7 zeigt, mehrere Befestigungselemente 31 in Reihe hintereinander angeordnet werden können.

Figur 8 zeigt die Befestigung eines Verkleidungsteils 40 an einer Unterlage 41, beispielsweise dem Bodenblech eines Kraftfahrzeuges. Die Herstellung der Befestigung erfolgt in zwei Schritten. Zunächst wird das Befestigungselement 1 mit dem Kopf 15 des Bolzens 3 mit Hilfe einer elektrischen Schweißvorrichtung an der Unterlage 41 angeschweißt. Bei dem Schweißvorgang wird der Bolzen 3 von einer drei Finger umfassenden Schweißzange gehalten, wobei die Finger in die Zwischenräume zwischen den Sperrklinken 7 hineinragen und durch die Öffnungen 17 den Bolzen 3 unmittelbar kontaktieren und festhalten. Auf diese Weise werden zunächst mehrere, für die Befestigung des Verkleidungsteils 40 benötigte Befestigungselemente 1 an der Unterlage 41 angeschweißt.

Im zweiten Schritt erfolgt dann das Montieren des Verkleidungsteils 40 an den Befestigungselementen 1. Das Verkleidungsteil 40 weist hierzu an den Stellen, wo sich die Befestigungselemente an der Unterlage 41 befinden, runde Löcher 42 auf, deren Durchmesser gleich oder geringfügig kleiner ist als der Durchmesser der den Abstützflächen 10 gemeinsamen Zylinderfläche. Aufgrund der kegelstumpfförmigen Form der Außenflächen 8 der Befestigungselemente 1 kann das Verkleidungsteil 40 leicht an den Befestigungselementen 1 ausgerichtet und auf diese aufgeschoben werden. Durch axialen Druck auf das Verkleidungsteil 40 gleitet dieses mit den Rändern der Löcher 42 auf den Außenflächen 8 der Sperrklinken 7 nach oben, wobei die Sperrklinken 7 jeweils radial nach innen zum Schaft 4 hin federnd ausweichen. Das Verkleidungsteil 40 wird dann an den einzelnen Befestigungsstellen bis zur Anlage an den Flansch 12 und unter geringer elastischer Verformung desselben so weit in Richtung der Unterlage 41 bewegt, bis die Außenflächen 8 aus dem Loch 42 heraustreten und die Sperrklinken 7 in die in der Zeichnung dargestellte Verriegelungsposition zurückspringen. In dieser Lage greift das Verkleidungsteil 40 in die Eingriffsausnehmungen 9 ein und ist durch die Abstützflächen 10, 11 und den Flansch 12 spielfrei gehalten. Wie die Ausführungen zeigen, ist die Montage des Verkleidungsteils 40 sehr einfach, da dieses lediglich in die Montageposition gebracht und dann angedrückt werden muss.

Besteht das Verkleidungsteil aus einem Material, das zu instabil ist, um an den Abstützflächen 11 zuverlässig abgestützt werden zu können, so kann nach der Montage des Verkleidungsteils oder gemeinsam mit diesem eine Scheibe aus Metall oder Kunststoff montiert werden, die sich an den Abstützflächen 11 abstützt und eine ausreichend große Anlagefläche für das Verkleidungsteil bildet. Besteht das Verkleidungsteil aus einem weichen oder textilen Material, so kann die Scheibe auf ihrer der Verkleidung zugekehrten Seite Spitzen, Noppen oder Kletthaken haben, die sich in dem Verkleidungsteil verankern und ein Ausknöpfen des Verkleidungsteils verhindern.

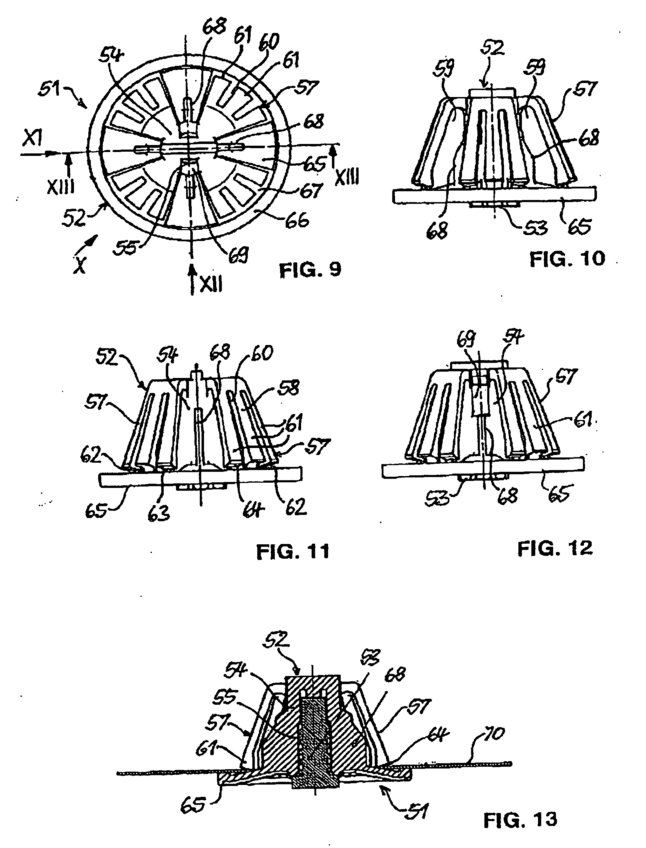

Das in den Figuren 9 bis 13 dargestellte Befestigungselement 51 ist zur Befestigung von empfindlichen Verkleidungsteilen, wie beispielsweise dünnwandigen Abschirmblechen bestimmt und soll verhindern, dass solche Verkleidungsteile bei der Montage verformt oder beschädigt werden können. Das Befestigungselement 51 gleicht in seinem grundsätzlichen Aufbau dem oben beschriebenen Befestigungselement 1 und weist einen Clip 52 aus thermoplastischem Kunststoff und einen an eine Unterlage anschweißbaren Bolzen 53 auf. Der Clip 52 hat einen zentralen Schaft 54 mit einer den Bolzen 53 aufnehmenden Längsbohrung 55. An das eine Ende des Schafts 54 sind vier in regelmäßigem Abstand voneinander angeordnete Sperrklinken 57 angeformt, die sich von dem Schaft 54 radial nach außen und in Richtung des anderen Endes des Schafts 54 erstrecken. In Umfangsrichtung erstrecken sich die einzelnen Sperrklinken 57 über einen Winkel von etwa 50°, entsprechend beträgt ihr Umfangsabstand etwa 40°. Die Sperrklinken 57 haben Außenflächen 58, die Teil einer zur Längsachse des Schafts 54 koaxialen Kegelstumpffläche sind. Die Kegelstumpffläche hat vorzugsweise einen Kegelwinkel von 40°. Zwischen den Sperrklinken 57 und dem Schaft 54 ist ein Freiraum 59 vorgesehen, in den die in radialer Richtung federnd nachgiebigen Sperrklinken 57 bei der Montage eines Verkleidungsteils ausweichen können. Jede der Sperrklinken 57 ist durch sich in Längsrichtung erstreckende und an den freien Enden der Sperrklinken 57 offene Schlitze 60 in drei Finger 61 unterteilt. Durch diese Unterteilung erhalten die Sperrklinken 57 im Vergleich zu den Sperrklinken 7 des Befestigungselements 1 eine deutlich größere radiale Nachgiebigkeit. Die Sperrklinken geben daher leichter nach, wenn der Clip 52 in das Loch eines Verkleidungsteils eingesetzt wird, so dass das Verkleidungsteil weniger stark belastet wird und daher nicht so leicht verbogen oder beschädigt werden kann.

An den freien Enden haben die Finger 61 auf ihrer Außenseite Eingriffsausnehmungen 62 mit einer sich in Längsrichtung erstreckenden Abstützfläche 63 und einer sich in radialer Richtung erstreckenden Abstützfläche 64. Die Abstützflächen 64 sind senkrecht zur Längsachse der Finger 61 ausgerichtet, sie können aber auch in einer gemeinsamen, zur Längsachse des Schafts 54 senkrechten Ebene liegen.

Den freien Enden der Sperrklinken 57 benachbart ist ein an das offene Ende des Schafts 54 angeformter Flansch 65. Der Flansch 65 hat die Form eines flachen Kegelstumpfs. Sein äußerer Rand hat einen größeren Durchmesser als die freien Enden der Sperrklinken 57 und ist mit einer ringförmigen Verstärkung 66 zur Bildung einer Anlagefläche für das zu befestigende Verkleidungsteil versehen. Unterhalb der Sperrklinken 57 hat der Flansch 65 Aussparungen, deren Größe wenigstens der Axialprojektion der Sperrklinken 57 entspricht. Hierdurch kann der Clip 52 in einem einfachen zweiteiligen Formwerkzeug durch Spritzgießen hergestellt werden. Da die Aussparungen 67 die Anbindung des Flansches 65 an den Schaft 54 schwächen, sind in den Zwischenräumen zwischen den Sperrklinken jeweils mittig Verstärkungsrippen 68 angeordnet, die in radialer Richtung von dem Schaft 54 abragen und den Schaft 54 mit dem Flansch 65 verbinden. Der Schaft 54 weist außerdem an zwei diametral gegenüber liegenden Seiten radiale Öffnungen 69 auf, durch die der Bolzen 53 mit Kontaktelementen zur Zuführung des Schweißstroms verbindbar ist.

Figur 13 veranschaulicht eine Anwendung des Befestigungselements 51 im Automobilbau. Hierbei wird das Befestigungselement 51 mit einem Abschirmblech 70 verbunden, welches sehr dünnwandig ist und leicht verbogen werden kann. Das Abschirmblech 70 wird an dem Clip 52 befestigt. Es hat hierzu eine kreisrunde Öffnung, deren Durchmesser dem Außendurchmesser des Clips 52 an den axialen Abstützflächen 63 der Eingriffsausnehmungen 62 entspricht. Zur Montage wird das Abschirmblech 70 auf das kegelstumpfförmige Ende des Clips 52 aufgesetzt und über die Sperrklinken 57 in die in Figur 13 gezeigte Endlage gedrückt. Bei diesem Vorgang weichen die Finger 61 der Sperrklinken 57 aufgrund ihrer Nachgiebigkeit ohne großen Widerstand radial nach innen aus und federn in der Montageendlage in ihre Ausgangsstellung zurück. Das Abschirmblech 70 kann daher ohne große Belastung und die Gefahr einer Verformung montiert werden. In der Montageendlage greifen die Finger 61 mit den radialen Abstützflächen 64 über den Öffnungsrand des Abschirmbleches 70 und halten es auf dem Clip 52 fest. Nach der Montage des Abschirmbleches 70 kann in analoger Weise wie oben in Verbindung mit Figur 8 beschrieben ein Verkleidungsteil an dem Clip 52 montiert werden, welches sich unmittelbar auf das Abschirmblech 70 auflegt. Bei der Montage des Verkleidungsteils gibt der Flansch 65 in Richtung der mit dem Bolzen 53 verschweißten Unterlage unter der Wirkung des Montagedrucks federnd nach, wodurch der erforderliche Zwischenraum zwischen dem Abschirmblech 70 und den Abstützflächen 64 zur Aufnahme des Verkleidungsteils erzeugt wird. Das Verkleidungsteil liegt somit nach der Montage mit dem Rand seiner Öffnung an den Abstützflächen 64 an und das Abschirmblech 70 ist zwischen dem Flansch 65 und der Verkleidung angeordnet.

## Patentansprüche

1. Befestigungselement (1; 51) mit einem Schaft (4; 54), einem an einem Ende des Schafts (4; 54) angeordneten Kopf (15), der zum Anschweißen an ein Werkstück bestimmt ist, wenigstens einer an dem Schaft (4; 54) ausgebildeten Sperrklinke (7; 57), die sich von dem Schaft (4; 54) radial nach außen und in Richtung des Kopfes (15) erstreckt und redial nach innen federnd nachgiebig ist und die auf ihrer Außenseite eine Eingritfsausnehmung (9; 62) mit einer radialen und einer axialen Abstützfläche aufweist, wobei der Schaft (4; 54) eine Längsbohrung (5; 55) hat, in der ein Bolzen (3; 53) angeordnet ist, wobei ein Ende des Botzens (3; 53) aus der Längsbohrung (5: 55) herausragt und den Kopf (15) bildet und wobei an dem Schaft (4; 54) ein Flansch (12: 65) ausgebildet ist, dessen äußerer Radbereich der Eingriffsausnehmung (9; 62) der Sperrklinke (7; 57) gegenüberliegt und in Längsrichtung des Schafts (4; 54) ledernd nachgiebig ist, **dadurch gekennzeichnet dass** der Flansch (12; 65) im Bereich der axialen Projektion der Spenklienke (7; 57) ausgespart ist.

2. Befestigungselement nach Anspruch 1, **dadurch gekennzeichnet, dass** an dem Schaft (4; 54) mehrere Sperrklinken (7; 57) befestigt sind, die durch Zwischenräume voneinander getrennt sind, wobei die Außenflächen (8; 58) der Sperrklinken (7; 57) Abschnitte einer gemeinsamen Kegelstumpffläche bilden und wobei die radialen Abstützflächen der Eingriffsausnehmungen (9; 62) der Sperrklinken (7; 57) auf einer gemeinsamen, zur Kegelstumpffläche koaxialen Zylinderfläche liegen.

3. Befestigungselement nach einem der Ansprüche 1 oder 2, **dadurch gekennzeichnet, dass** in der Wand des Schafts (4; 54) wenigstens eine von außen in radialer Richtung frei zugängliche Öffnung (17; 69) ausgebildet ist, die in die Längsbohrung (5; 55) mündet.

4. Befestigungselement nach einem der vorhergehenden Ansprüche, **dadurch gekennzeichnet, dass** die wenigstens eine Sperrklinke (57) durch wenigstens einen sich in Längsrichtung erstreckenden Schlitz (60) in Finger (61) unterteilt ist.

5. Befestigungselement nach einem der vorhergehenden Ansprüche, **dadurch gekennzeichnet, dass** in einem Zwischenraum zwischen zwei Sperrklinken (57) eine Verstärkungsrippe (68) angeordnet ist, die von dem Schaft (54) abragt und den Schaft (54) mit dem Flansch (65) verbindet.

6. Befestigungselement nach einem der vorhergehenden Ansprüche, **dadurch gekennzeichnet, dass** der Bolzen (3; 53) ein Außengewinde aufweist, das in die Längsbohrung (5; 55) im Schaft (4; 54) formschlüssig eingreift.

7. Befestigungselement nach dem vorhergehenden Anspruch, **dadurch gekennzeichnet, dass** das dem Kopf (15) entgegengesetzten Ende des Schafts (4; 54) einen Werkzeugeingriffsbereich für ein Schraubwerkzeug aufweist.

8. Befestigungselement nach einem der vorhergehenden Ansprüche, **dadurch gekennzeichnet, dass** an dem Schaft (4) oder der Sperrklinke (7) Führungselemente vorgesehen sind, welche die Außenkontur des Flansches (12) axial verlängern und deren axiale Länge so groß bemessen ist, dass das Befestigungselement (1) in einem Förderkanal mit rundem Querschnitt lagestabil und ohne Klemmneigung mit zur Kanalachse koaxialer Längsachse förderbar ist, wobei die Führungselemente durch Stollbruchstellen abtrennbar mit dem Befestigungselement verbunden sind.

9. Befestigungselement nach einem der vorhergehenden Ansprüche, **dadurch gekennzeichnet, dass** Führungselemente aus mehreren achsparallelen Stäben (31) bestehen, die am Umfangsrand des Flansches (12) angeordnet sind.

10. Befestigungselement nach einem der vorhergehenden Ansprüche, **dadurch gekennzeichnet, dass** in einem Abstand von dem Flansch (12) und parallel zu diesem ein Führungsteller (26) angeordnet ist, der den gleichen Durchmesser wie der Flansch (12) hat.

11. Befestigungselement nach einem der vorhergehenden Ansprüche, **dadurch gekennzeichnet, dass** an dem dem Kopf (15) entgegengesetzten Ende des Schafts (4) Kupplungselemente (18) angeordnet sind.

## Claims

1. Fastener (1; 51) with a shank (4; 54), a head (15) at one end of the shank (4; 54) intended for welding to a workpiece, and at least one detent pawl (7; 57) formed on the shank (4; 54) that extends radially outward from the shank (4; 54) toward the head (15) and that is elastically resilient in the radially inward direction and that has on its outside an engagement recess (9; 62) with a radial and an axial support surface, wherein the shank (4; 54) has a longitudinal hole (5; 55) in which is located a stud (3; 53), wherein one end of the stud (3; 53) projects out of the longitudinal hole (5; 55) and forms the head (15), and wherein a flange (12; 65) that is elastically resilient in the axial direction, whose outermost edge region is located opposite the engagement recess (9; 62) of the detent pawl (7; 57), is formed on the shank (4; 54), **characterized in that** the flange (12; 65) is recessed in the area of the axial projection of the detent pawl (7; 57).

2. Fastener according to claim 1, **characterized in that** multiple detent pawls (7; 57), which are separated from one another by gaps, are attached to the shank (4; 54), wherein the outside surfaces (8; 58) of the detent pawls (7; 57) constitute segments of a common truncated cone and wherein the radial support surfaces of the detent pawl engagement recesses (9; 62) lie on a common cylindrical surface that is coaxial to the surface of the truncated cone.

3. Fastener according to one of claims 1 or 2, **characterized in that** in the wall of the shank (4; 54) at least one opening (17; 69) is formed that in the radial direction is freely accessible from outside, and that opens onto the longitudinal hole (5; 55).

4. Fastener according to one of the preceding claims, **characterized in that** the at least one detent pawl (57) is subdivided into fingers (61) by at least one slot (60) extending in the longitudinal direction.

5. Fastener according to one of the preceding claims, **characterized in that**, located in a gap between two detent pawls (57) is a reinforcing rib (68), which projects from the shank (54) and joins the shank (54) to the flange (65).

6. Fastener according to one of the preceding claims, **characterized in that** the stud (3; 53) has an external thread that engages in the longitudinal hole (5; 55) in the shank (4; 54) in an interlocking manner.

7. Fastener according to the preceding claim, **characterized in that** the end of the shank (4; 54) opposite the head (15) has a tool engagement region for a screwdriver or wrench.

8. Fastener according to one of the preceding claims, **characterized in that**, provided on the shank (4) or detent pawl (7) are guide elements which axially lengthen the outside contour of the flange (12) and have a sufficiently long axial length that the fastener (1) can be conveyed in a positionally stable manner and without a tendency to jam, with the fastener's longitudinal axis coaxial to the channel axis, through a conveyor channel with a round cross-section, wherein the guide elements are connected in a separable manner to the fastener by means of predetermined breaking points.

9. Fastener according to one of the preceding claims, **characterized in that** guide elements consist of multiple axially parallel rods (31) arranged on the circumferential edge of the flange (12).

10. Fastener according to one of the preceding claims, **characterized in that** a guide disk (26) of equal diameter to the flange (12) may be arranged a distance from the flange (12) and parallel thereto.

11. Fastener according to one of the preceding claims, **characterized in that** coupling elements (18) are arranged at the end of the shank (4) opposite the head (15).

## Revendications

1. Élément de fixation (1 ; 51) avec une tige (4 ; 54), une tête (15) agencée à une extrémité de la tige (4 ; 54) qui est destinée à la soudure sur une pièce usinée, au moins un cliquet d'arrêt (7 ; 57) formé contre la tige (4 ; 54) qui s'étend radialement à partir de la tige (4; 54) vers l'extérieur et dans la direction de la tête (15) et qui est radialement déformable à la manière d'un ressort vers l'intérieur et qui sur son côté extérieur présente un creux d'engagement (9 ; 62) avec une surface d'appui radiale et une surface d'appui axiale, dans lequel la tige (4 ; 54) présente un alésage longitudinal (5 ; 55) dans lequel est agencé un boulon (3 ; 53), une extrémité du boulon (3 ; 53) faisant saillie à partir de l'alésage longitudinal (5 ; 55) et formant la tête (15) et dans lequel une collerette (12 ; 65) est formée contre la tige (4 ; 54), collerette dont la zone de bord extérieur est située à l'opposée du creux d'engagement (9 ; 62) du cliquet d'arrêt (7 ; 57) et est déformable à la manière d'un ressort dans le sens longitudinal de la tige (4 ; 54), **caractérisé en ce que** la collerette (12 ; 65) est évidée dans la zone de la projection axiale du cliquet d'arrêt (7 ; 57).

2. Élément de fixation selon la revendication 1, **caractérisé en ce que** plusieurs cliquets d'arrêt (7 ; 57), séparés les uns des autres par des espaces intermédiaires, sont fixés contre la tige (4 ; 54), dans lequel les surfaces extérieures (8 ; 58) des cliquets d'arrêt (7 ; 57) forment des sections d'une surface de cône tronqué commune, et dans lequel les surfaces d'appui radiales des creux d'engagement (9 ; 62) des cliquets d'arrêt (7 ; 57) reposent sur une surface de cylindre commune coaxiale avec la surface de cône tronqué.

3. Élément de fixation selon l'une quelconque des revendications 1 ou 2, **caractérisé en ce qu'**au moins une ouverture (17 ; 69), librement accessible depuis l'extérieur dans le sens radial, est formée dans la paroi de la tige (4 ; 54), ouverture qui débouche dans l'alésage longitudinal (5 ; 55).

4. Élément de fixation selon l'une quelconque des revendications précédentes, **caractérisé en ce que** le au moins un cliquet d'arrêt (57) est divisé en doigts (61) par au moins une fente (60) s'étendant dans le sens longitudinal.

5. Élément de fixation selon l'une quelconque des revendications précédentes, **caractérisé en ce qu'**une nervure de renforcement (68) est agencée dans un espace intermédiaire entre deux cliquets d'arrêt (57), laquelle s'étend depuis la tige (54) et relie la tige (54) à la collerette (65).

6. Élément de fixation selon l'une quelconque des revendications précédentes, **caractérisé en ce que** le boulon (3 ; 53) présente un filetage extérieur qui s'engage par complémentarité de forme dans l'alésage longitudinal (5 ; 55) dans la tige (4 ; 54).

7. Élément de fixation selon la revendication précédente, **caractérisé en ce que** l'extrémité de la tige (4 ; 54) située à l'opposé de la tête (15) présente une zone d'engagement d'outil pour un outil de vissage.

8. Élément de fixation selon l'une quelconque des revendications précédentes, **caractérisé en ce que** contre la tige (4) ou le cliquet d'arrêt (7) sont prévus des éléments de guidage qui prolongent axialement le contour extérieur de la collerette (12) et dont la longueur axiale est dimensionnée de telle sorte que l'élément de fixation (1) peut être déplacé dans un conduit de transport à coupe circulaire, dans une position stable et sans tendance au coincement, avec l'axe longitudinal coaxial avec l'axe du conduit, dans lequel les éléments de guidage sont reliés avec l'élément de fixation de façon séparable via des points destinés à la rupture.

9. Élément de fixation selon l'une quelconque des revendications précédentes, caractérisé en que les éléments de guidage sont constitués de plusieurs barres (31) parallèles à l'axe et agencées contre le bord périphérique de la collerette (12).

10. Élément de fixation selon l'une quelconque des revendications précédentes, **caractérisé en ce qu'**un dispositif de guidage (26), qui a le même diamètre que la collerette (12), est agencé à une certaine distance de la collerette (12) et parallèlement à celle-ci.

11. Élément de fixation selon l'une quelconque des revendications précédentes, **caractérisé en ce que** des éléments de couplage (18) sont agencés contre l'extrémité de la tige (4) opposée à la tête (15).
